# EUROPÄISCHE PATENTSCHRIFT

(11) **EP 1 272 744 B1**
(45) Veröffentlichungstag und Bekanntmachung des Hinweises auf die Patenterteilung: **16.08.2006**
(21) Anmeldenummer: 01900434.0
(22) Anmeldetag: 12.01.2001
(51) Int. Cl.: F01N 3/08, B01D 53/04

(54) **VORRICHTUNG UND VERFAHREN ZUR ERMITTLUNG EINER REGENERATIONSNOTWENDIGKEIT EINES NOx-SPEICHERKATALYSATORS**
DEVICE AND METHOD FOR DETERMINING THE NEED FOR REGENERATION IN A NOx STORAGE CATALYTIC CONVERTER
DISPOSITIF ET PROCEDE POUR DETERMINER LA NECESSITE DE REGENERATION D'UN CATALYSEUR ACCUMULATEUR DE NOx

(30) Priorität: 17.02.2000 DE 10007048
(43) Veröffentlichungstag der Anmeldung: 08.01.2003
(73) Patentinhaber: Volkswagen Aktiengesellschaft, 38436 Wolfsburg (DE)
(72) Erfinder: HAHN, Hermann, 30175 Hannover (DE); HINZE, Sören, 38102 Braunschweig (DE); LINDLAU, Michael, 38162 Cremlingen (DE)
(74) Vertreter: Schneider, Henry
(86) Internationale Anmeldenummer: PCT/EP2001/000335
(87) Internationale Veröffentlichungsnummer: WO 2001/061162

(56) Entgegenhaltungen:
- EP-A- 0 598 917
- EP-A- 0 867 604
- EP-A- 1 061 245
- PATENT ABSTRACTS OF JAPAN vol. 018, no. 212 (M-1593), 15. April 1994 (1994-04-15) & JP 06 010725 A (TOYOTA MOTOR CORP), 18. Januar 1994 (1994-01-18)

## Beschreibung

Die Erfindung betrifft eine Vorrichtung und ein Verfahren zur Ermittlung einer Regenerationsnotwendigkeit eines NOₓ-Speicherkatalysators, der in einem Abgasstrang einer zumindest zeitweise magerlaufenden Verbrennungskraftmaschine für Kraftfahrzeuge angeordnet ist.

Moderne Verbrennungskraftmaschinen werden zur Verbrauchsoptimierung vorzugsweise unter mageren Bedingungen betrieben. Unter solchen Bedingungen durchläuft ein spezifischer Kraftstoffverbrauch im Allgemeinen ein Minimum. Dieses Minimum liegt beispielsweise für Ottomotoren bei einem Luftverhältnis von zirka λ = 1,1 (bei Otto-Dl-Motoren kann Lambda Werte von bis zu λ = 4,5 und bei Dieselmotoren Werte von bis zu λ = 8 annehmen). In bestimmten Fahrsituationen erfordert der Betrieb des Kraftfahrzeuges ein maximales Drehmoment der Verbrennungskraftmaschine (zum Beispiel Kickdown, Beschleunigungsvorgang). Erfahrungsgemäß stellt die Verbrennungskraftmaschine unter Luftverhältnissen im Bereich von λ = 0,95 bis 0,98 ihr maximales Drehmoment zur Verfügung, allerdings mit dem Nachteil, dass somit der verbrauchsoptimierte Betriebsbereich verlassen werden muss.

Die von der Verbrennungskraftmaschine emittierten Schadstoffanteile sind im Wesentlichen von dem während eines Verbrennungsvorgangs herrschenden Luftverhältnis abhängig. Wird ein Luft-Kraftstoff-Gemisch unter fetten Bedingungen (λ < 1) verbrannt, so sind naturgemäß reduzierende Schadstoffkomponenten, wie Kohlenmonoxid CO und unverbrannte Kohlenwasserstoffe HC, deutlich erhöht. Auf der anderen Seite wird bei einem Wechsel in magere Atmosphäre eine Bildung von Stickoxiden NOₓ verstärkt. Die NOₓ-Bildung durchläuft dabei ein Maximum, das in etwa im verbrauchsoptimierten Bereich der Verbrennungskraftmaschine liegt. Wird demnach die Verbrennungskraftmaschine zumindest zeitweise magerlaufend betrieben, um den Kraftstoffverbrauch zu senken, muss gleichzeitig eine hohe NOₓ-Emission in Kauf genommen werden.

Es ist ferner bekannt, ein während des Verbrennungsvorgangs entstehendes Abgas zu reinigen und durch im Abgasstrang der Verbrennungskraftmaschine angeordnete Katalysatoren zu leiten. Unter fetten Bedingungen gelingt es dabei zumindest zeitweise, die Reduktionsmittel HC, CO mit noch vorhandenem Restsauerstoff oder gespeichertem Sauerstoff nahezu vollständig an so genannten Oxidationskatalysatoren umzusetzen. Beim Einsatz so genannter 3-Wege-Katalysatoren, die zusätzlich noch eine die Reduktion von NOₓ unterstützende Katalysatorkomponente aufweisen, ist eine weitestgehende Reduktion der Schadstoffemissionen unter stöchiometrischen Bedingungen möglich. Dabei wird das NOₓ mit Hilfe der Reduktionsmittel HC, CO umgesetzt.

Unter mageren Bedingungen, also insbesondere im verbrauchsoptimierten Bereich um λ = 1,1, sind die benötigten Reduktionsmittelmassenströme (HC- und CO-Massenströme) zu gering, um eine vollständige Reduktion der NOₓ-Emission zu ermöglichen. Es ist daher bekannt, dem Reduktionskatalysator einen NOₓ-Absorber zuzuordnen (NOₓ₋Speicherkatalysator), der das NOx so lange einlagert, bis die Reduktionsmittel wieder in ausreichendem Maße zur Verfügung gestellt werden können. Selbstverständlich ist eine Speicherkapazität eines solchen NOₓ-Speicherkatalysators endlich, das heißt, in regelmäßigen Abständen muss eine Regeneration durch Beaufschlagung mit einem fetten oder stöchiometrischen Abgas eingeleitet werden. Ein solcher Vorgang sollte dabei derart gesteuert werden, dass einerseits eine NOₓ-Durchbruchsemission infolge einer erschöpften Speicherkapazität möglichst gering ist, andererseits aber der verbrauchsungünstige Betrieb unter fetten oder stöchiometrischen Bedingungen nicht unnötig häufig erzwungen wird.

Zur Steuerung der Regeneration ist es daher bekannt, eine Regenerationsnotwendigkeit, beispielsweise anhand einer stromab des NOₓ-Speicherkatalysators gemessenen NOₓ₋Durchbruchsemission, festzulegen. Überschreitet diese Emission beispielsweise einen festgelegten Schwellenwert, so werden vorgenannte Maßnahmen eingeleitet. EP 0 867 604 A beschreibt ein Verfahren zur Regeneration eins NOₓ-Speichers, bei dem eine seit der letzten NOₓ-Regeneration eingelagerte NOₓ-Menge als Funktion der Motordrehzahl und Motorleistung berechnet wird und die Regeneration eingeleitet wird, wenn die eingelagerte NOₓ-Menge einen Schwellenwert überschreitet. Dabei werden die in der Vergangenheit durchlaufenden Motorleistungen zur Ermittlung einer NOₓ-Rohemission der Verbrennungskraftmaschine herangezogen, in Abhängigkeit welcher die NOₓ-Beladung des Speichers ermittelt wird.

In bestimmten Betriebssituationen kann jedoch durch eine derartig starre Festlegung der Regenerationsnotwendigkeit insgesamt ein unnötiger Mehrverbrauch entstehen. So ist es beispielsweise möglich, Beschleunigungsvorgänge auch unter mageren und damit verbrauchsoptimierten Bedingungen durchzuführen. Wenig sinnvoll ist es, die Regeneration erst in einer sich anschließenden Fahrphase mit annähernd konstanter Geschwindigkeit oder niedrigen Lasten durchzuführen, da in diesem Fall der relativ niedrige Reduktionsmittelmassenstrom zu einer verlängerten Regeneration führt. Zudem ist grundsätzlich mit niedrigeren Lasten eine Differenz zwischen Verbrauch im Magerbetrieb und Verbrauch im entsprechenden stöchiometrischen oder fetten Betrieb größer als bei höheren Lasten.

Aufgalie der vorliegenden Erfindung ist es daher, eine Vorrichtung und ein Verfahren zur Verfügung zu stellen, mit denen es möglich ist, die Regenerationsnotwendigkeit unter Berücksichtigung einer Motorleistung der Verbrennungskraftmaschine anzupassen. Letztendlich senkt die Adaption der Regenerationsnotwendigkeit den Kraftstoffverbrauch.

Mit Hilfe der Vorrichtung und des Verfahrens zur Ermittlung der Regenerationsnotwendigkeit des NOₓ-Speicherkatalysators mit den in den unabhängigen Ansprüchen genannten Merkmalen können die geschilderten Nachteile des Standes der Technik überwunden werden. Dadurch, dass die Regenerationsnotwendigkeit in Abhängigkeit von
(a) von einer verbleibenden NOₓ-Speicherfähigkeit des NOₓ-Speicherkatalysators und
(b) von antriebsseitigen Parametern, umfassend
   - eine momentane Motorleistung der Verbrennungskraftmaschine und einen prognostizierten Motorleistungsgradienten in einem vorgegebenen Zeithorizont und/oder eine prognostizierte Motorleistung am Ende des vorgegebenen Zeithorizontes oder
   - einen prognostizierten Motorleistungsgradienten in einem vorgegebenen Zeithorizont und/oder eine prognostizierte Motorleistung am Ende des vorgegebenen Zeithorizontes
bestimmt wird, kann beispielsweise in Beschleunigungsphasen des Kraftfahrzeugs, die nach den herkömmlichen Regelungen noch unter mageren Bedingungen durchgeführt würden, ein Wechsel in den Regenerationsbetrieb erzwungen werden.

Die Vorrichtung umfasst dazu Mittel, mit denen eine solche Bestimmung der Regenerationsnotwendigkeit ermöglicht wird. Diese Mittel umfassen ein Steuergerät, in dem eine Prozedur zur Ermittlung der Regenerationsnotwendigkeit in digitalisierter Form hinterlegt ist. Das Steuergerät kann dabei in ein bereits vorhandenes Motorsteuergerät integriert sein.

Die für die Bestimmung notwendige Motorleistung kann mit Hilfe bekannter Modelle bestimmt werden. Dabei kann einerseits eine momentane Motorleistung, aber auch eine nach einem vorgegebenen Zeithorizont sich einstellende, prognostizierte Motorleistung sowie der in diesem Zeithorizont vorliegende Motorleistungsgradient berücksichtigt werden. Die letzten beiden Größen lassen sich insbesondere mit Hilfe von Parametern, wie einer Fahrsituation, einem Beschleunigungsgradienten, einer Fahrpedalstellung und einem aktuellen Übersetzungsverhältnis, berechnen.

Weiterhin ist bevorzugt, bei der Ermittlung zusätzlich den Beschleunigungsgradienten während eines vorgegebenen Zeitintervalls sowie die Fahrpedalstellung zu berücksichtigen. Ebenso kann es vorteilhaft sein, auch hier das aktuelle Übersetzungsverhältnis sowie die Fahrsituation mit einfließen zu lassen. Die Regenerationsnotwendigkeit kann auf diese Weise für bestimmte Fahrsituationen oder mit steigendem Beschleunigungsgradienten oder höherer Fahrpedalstellung wahrscheinlicher werden. In gleicher Weise steigt die Wahrscheinlichkeit, dass die Regeneration durchgeführt werden muss, mit steigenden aktuellen oder prognostizierten Motorleistungen.

Die NOₓ-Speicherfähigkeit kann beispielsweise in Form einer normierten Beladungszahl in die Ermittlung mit einfließen. Insgesamt kann die Ermittlung derart durchgeführt werden, dass sie einen Kennwert liefert, der mit einem vorgegebenen Schwellenwert verglichen wird. Übersteigt dieser Kennwert den Schwellenwert, so wird die Regeneration durch Wechsel in den stöchiometrischen oder fetten Betrieb initiiert. Da der Kennwert von vorgenannten Größen abhängig ist, ist es damit möglich, statt der herkömmlichen starren Vorgabe eine situationsbedingte Bestimmung der Regenerationsnotwendigkeit zuzulassen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Prinzipdarstellung einer Verbrennungskraftmaschine mit einer Abgasreinigungsanlage im Abgasstrang;
- Figur 2: Verläufe ausgewählter Schadstoffkomponenten, eines Drehmomentes und eines spezifischen Kraftstoffverbrauchs bei einem Ottomotor in Abhängigkeit von einer Luftzahl und
- Figur 3: ein Ablaufdiagramm zur Ermittlung einer Regenerationsnotwendigkeit.

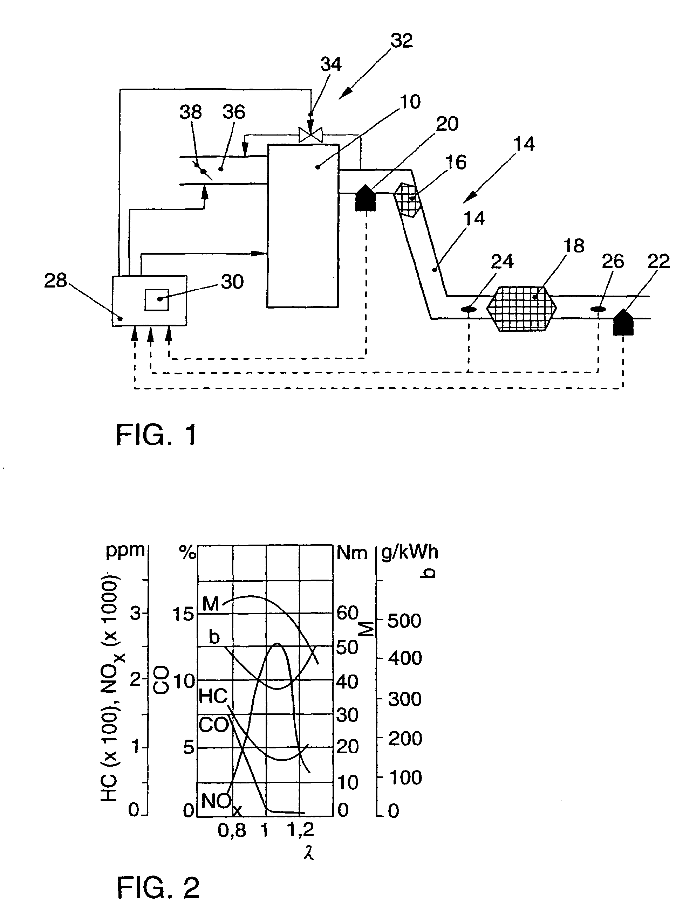

Die Figur 1 zeigt eine Verbrennungskraftmaschine 10, die in ihrem Abgasstrang 12 eine Abgasreinigungsanlage 14 aufweist. Die Abgasreinigungsanlage 14 umfasst Komponenten wie einen Vorkatalysator 16 und einen NOₓ-Speicherkatalysator 18. Weiterhin sind im Abgasstrang 14 Sensoren angeordnet, die eine Erfassung der Anteile ausgewählter Schadstoffkomponenten und/oder eines Luftverhältnisses λ und/oder einer Temperatur ermöglichen. Als Gassensoren 20, 22 kommen beispielsweise NOₓ-Sensoren oder Lambdasonden in Frage. Die Temperatursensoren 24, 26 liefern gemäß diesem Ausführungsbeispiel eine Abgastemperatur stromauf und stromab des NOₓ₋Speicherkatalysators 18. Die Signale der Sensoren 20, 22, 24, 26 werden in bekannter Weise an ein Motorsteuergerät 28 übermittelt.

Das Motorsteuergerät 28 beinhaltet zusätzlich ein Steuergerät 30, mit dem in noch näher zu erläuternder Weise die Ermittlung einer Regenerationsnotwendigkeit des NOₓ₋Speicherkatalysators 18 durchgeführt werden kann. Dazu ist in dem Steuergerät 30 eine entsprechende Prozedur in digitaler Form hinterlegt. Selbstverständlich kann das Steuergerät 30 auch als eigenständige Einheit realisiert werden.

Mit Hilfe des Motorsteuergerätes 28 lassen sich ferner die Betriebsparameter der Verbrennungskraftmaschine 10 in bekannter Weise beeinflussen. Dazu sind im Motorsteuergerät 28 entsprechende Modelle hinterlegt, die geeignete Stellgrößen an die der Verbrennungskraftmaschine 10 zugeordnete Verstelleinrichtungen vorgeben. Exemplarisch ist hier eine Abgasrückführeinrichtung 32 abgebildet, bei der über ein Abgasrückführventil 34 eine Abgasrückführrate geregelt werden kann. Weiterhin ist in einem Saugrohr 36 eine Drosselklappe 38 vorhanden, mit der ein angesaugter Volumenstrom durch Vorgabe eines Drosselklappenwinkels eingestellt werden kann. In bekannter Weise lässt sich insbesondere ein Luftverhältnis λ für ein zu verbrennendes Luft-Kraftstoff-Gemisch über die Abgasrückführeinrichtung 32 und die Drosselklappe 38 sowie ein hier nicht dargestelltes Einspritzsystem einstellen.

Die Figur 2 verdeutlicht den Einfluss des Luftverhältnisses λ auf ein Drehmoment M der Verbrennungskraftmaschine 10, einen spezifischen Kraftstoffverbrauch b sowie die Bildung ausgewählter Schadstoffkomponenten. Unter verbrauchsoptimierten Bedingungen bei zirka 1,1 ist zwar nicht ein maximales Drehmoment M der Verbrennungskraftmaschine 10 erzeugbar, jedoch reicht das vorhandene Drehmoment M für die meisten Fahrsituationen aus (das Verbrauchsoptimum bei λ zirka 1,1 findet sich erfahrungsgemäß bei Ottomotoren, kann jedoch bei DI-Motoren und Dieselmotoren bei Werten von bis zu 4,5 beziehungsweise 8 liegen). Lediglich bei starken Lasten (zum Beispiel Bergauffahrt, hohe Beladung) und sehr starken Beschleunigungsvorgängen (zum Beispiel Kickdown) ist ein Wechsel in einen antriebsoptimierten Bereich bei zirka λ = 0,95 bis 0,98 notwendig. Demzufolge ist beim Betrieb der Verbrennungskraftmaschine 10 unter magerlaufenden Bedingungen eine Emission von Stickoxiden NOₓ stark erhöht, während die Emission von reduzierend wirkenden Schadstoffkomponenten wie Kohlenmonoxid CO und unverbrannten Kohlenwasserstoffen HC relativ niedrig ist. Unter derartigen Bedingungen ist eine vollständige Umsetzung des NOₓ im Vorkatalysator 16 beziehungsweise im NOₓ₋Speicherkatalysator 18 nicht möglich und das NOₓ wird lediglich in der Speicherkomponente des NOₓ-Speicherkatalysators 18 eingelagert. Da dieser nur eine endliche Speicherkapazität aufweist, muss in regelmäßigen Abständen ein Wechsel in den stöchiometrischen oder fetten Betrieb zur Bereitstellung ausreichender Reduktionsmittelmassenströme (HC- und CO-Massenströme) erfolgen.

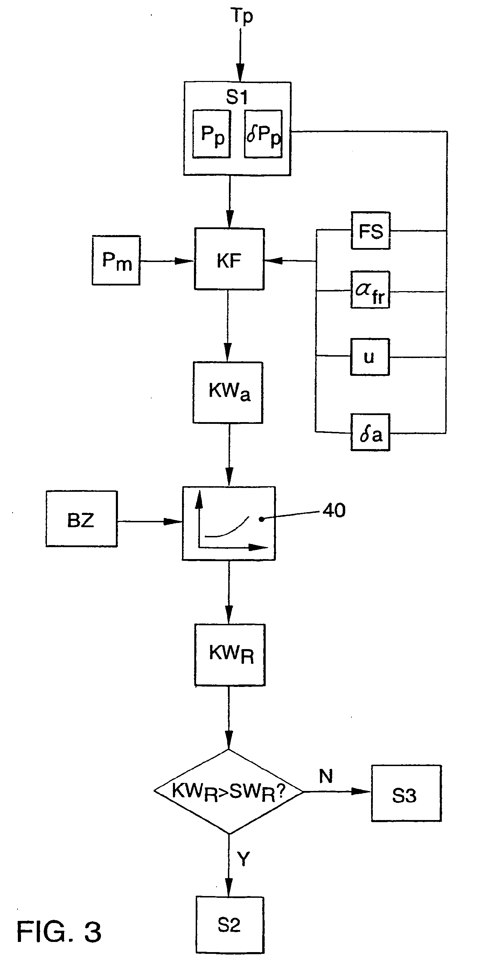

Eine Regenerationsnotwendigkeit kann dabei entsprechend dem in der Figur 3 dargestellten Ablaufdiagramm ermittelt werden. Grundsätzlich besteht eine Abhängigkeit von einer Motorleistung P der Verbrennungskraftmaschine 10 und einer noch verbleibenden NOₓ₋Speicherfähigkeit des NOₓ-Speicherkatalysators 18. Es hat sich jedoch als vorteilhaft erwiesen, noch weitere Parameter in die Bestimmung mit einfließen zu lassen.

Die Motorleistung P kann in Form einer momentanen Motorleistung Pₘ berücksichtigt werden. Dazu kann auf bekannte und daher hier nicht weiter erläuterte Modelle zurückgegriffen werden.

In einem Schritt S1 wird über ein Prädiktionsmodell eine prognostizierente Motorleistung Pₚ beziehungsweise ein prognostizierter Motorleistungsgradient δPₚ für einen vorgegebenen Zeithorizont Tₚ berechnet. In ein solches Modell können neben einer Momentenvergangenheit weitere Parameter einfließen. Ein solcher Parameter ist beispielsweise eine Fahrsituation FS, mit der sich beispielsweise eine Beschleunigungsphase des Kraftfahrzeugs, vorzugsweise aus dem Stand, charakterisieren lässt. Weiterhin kann eine Fahrpedalstellung α_{fp}, ein aktuelles Übersetzungsverhältnis u sowie ein Beschleunigungsgradient δa in einem verstrichenen Zeitintervall Tₐ in das Modell mit einfließen.

Die genannten Parameter, also die Fahrsituation FS, die Fahrpedalstellung α_{fp}, das Übersetzungsverhältnis u, der Beschleunigungsgradient δa, die momentane Motorleistung Pₘ, die prognostizierte Motorleistung Pₚ und der prognostizierte Motorleistungsgradient δPₚ fließen in ein Kennfeld KF ein, aus dem ein Kennwert KWₐ ausgelesen wird. Der Kennwert KWₐ ist damit eine Größe, die alle antriebsseitigen Parameter zusammenfasst.

Der Wert von KWₐ wird vorteilhafterweise derart festgelegt, dass er mit steigender Motorleistung P, erhöhter Fahrpedalstellung α_{fp} und erhöhtem Beschleunigungsgradienten δa ansteigt, so dass die über die nachfolgenden Schritte bestimmte Regenerationsnotwendigkeit wahrscheinlicher wird.

Neben den antriebsseitigen Parametern ist es notwendig, die noch verbleibende NOₓ₋Speicherfähigkeit des NOₓ-Speicherkatalysators 18 zu bestimmen. Dazu kann wiederum auf bekannte Modelle für den NOₓ-Speicherkatalysator 18 zurückgegriffen werden, deren Eingangsgrößen die über die Sensoren 20, 22, 24, 26 bereitgestellten Signale sind. Die NOₓ-Speicherfähigkeit kann beispielsweise in Form einer auf einen frischen NOₓ₋Speicherkatalysator 18 normierten Beladungszahl BZ für die weiteren Ermittlungen zur Verfügung gestellt werden.

Über eine Kennlinie 40 für die Beladungszahl BZ und den Kennwert KWₐ lässt sich ein Kennwert KW_{R} für die Regenerationsnotwendigkeit bestimmen. Vorteilhafterweise steigt der Wert für den Kennwert KW_{R} mit steigender Beladungszahl BZ und/oder steigendem Kennwert KWₐ.

In einer nachfolgenden Abfrage wird der Kennwert KW_{R} mit einem vorgegebenen Schwellenwert SW_{R} verglichen. Überschreitet der Kennwert KW_{R} den Schwellenwert SW_{R}, wird in einem nachfolgenden Schritt S2 eine Regenerationsmaßnahme ergriffen, indem beispielsweise die Drosselklappenstellung oder die Abgasrückführrate derart verändert wird, dass sich stöchiometrische oder fette Bedingungen für die Verbrennung des Luft-KraftstoffGemisches einstellen. Ist der Kennwert KW_{R} gleich oder niedriger als der Schwellenwert SW_{R}, so wird keine Maßnahme ergriffen (Schritt S3).

An dieser Stelle sei noch einmal darauf hingewiesen, dass mit den vorgenannten Maßnahmen die Regenerationsnotwendigkeit fahrsituationsbedingt beeinflusst werden kann. So ist es beispielsweise möglich, in einer mageren Beschleunigungsphase einen relativ hohen Wert für den Kennwert KW_{R} festzulegen. Infolgedessen steigt die Wahrscheinlichkeit, dass die Regenerationsnotwendigkeit vorliegt. Ein solches Vorgehen ist insofern vorteilhaft, als dass die Abgasmassenströme während eines Beschleunigungsvorgangs größer sind als in sich anschließenden, weitestgehend konstanten Fahrphasen. Somit würde ein Wechsel in den stöchiometrischen oder fetten Betrieb auch einen erhöhten Reduktionsmittelmassenfluss im Vergleich zur konstanten Fahrphase mit sich bringen, so dass eine insgesamt kürzere Regenerationsdauer möglich ist.

## Patentansprüche

1. Verfahren zur Ermittlung einer Regenerationsnotwendigkeit eines NOₓ₋Speicherkatalysators (18), der in einem Abgasstrang (12) einer zumindest zeitweise magerlaufenden Verbrennungskraftmaschine (10) für Kraftzeuge angeordnet ist, wobei die Regenerationsnotwendigkeit in Abhängigkeit
(a) von einer verbleibenden NOₓ-Speicherfähigkeit des NOₓ-Speicherkatalysators (18) und
(b) von antriebsseitigen Parametern, umfassend
- eine momentane Motorleistung (Pₘ) der Verbrennungskraftmaschine (10) und einen prognostizierten Motorleistungsgradienten (δPₚ) in einem vorgegebenen Zeithorizont (Tₚ) und/oder eine prognostizierte Motorleistung (Pₚ) am Ende des vorgegebenen Zeithorizontes (Tₚ) oder
- einen prognostizierten Motorleistungsgradienten (δPₚ) in einem vorgegebenen Zeithorizont (Tₚ) und/oder eine prognostizierte Motorleistung (Pₚ) am Ende des vorgegebenen Zeithorizontes (Tₚ)
bestimmt wird.

2. Verfahren nach Anspruch 1, **dadurch gekennzeichnet, dass** bei der Ermittlung zusätzlich ein Beschleunigungsgradient (δa) für ein vorgegebenes Zeitintervall (Tₐ) berücksichtigt wird.

3. Verfahren nach einem der vorhergehenden Ansprüche, **dadurch gekennzeichnet, dass** bei der Ermittlung zusätzlich eine Fahrpedalstellung (α_{fp}) berücksichtigt wird.

4. Verfahren nach einem der vorhergehenden Ansprüche, **dadurch gekennzeichnet, dass** bei der Ermittlung zusätzlich ein Übersetzungsvefiältnis (u) eines Getriebes berücksichtigt wird.

5. Verfahren nach einem der vorhergehenden Ansprüche, **dadurch gekennzeichnet, dass** bei der Ermittlung zusätzlich eine Fahrsituation (FS) des Kraftfahrzeugs berücksichtigt wird.

6. Verfahren nach Anspruch 5, **dadurch gekennzeichnet, dass** die Fahrsituation (FS) eine magere Beschleunigungsphase, insbesondere aus dem Stand, ist.

7. Verfahren nach einem der vorhergehenden Ansprüche, **dadurch gekennzeichnet, dass** die prognostizierte Motorleistung (Pₚ) und/oder der prognostizierte Motorleistungsgradient (δPₚ) anhand eines Modells, in das eine Momentenvergangenheit, die Fahrsituation (FS), der Beschleunigungsgradient (δa), die Fahrpedalstellung (α_{fp}) und das aktuelle Übersetzungsverhältnis (u) einfließt, berechnet wird.

8. Verfahren nach einem der vorhergehenden Ansprüche, **dadurch gekennzeichnet, dass** ein Kennwert (KW_{R}) als Maß für die Regenerationsnotwendigkeit bestimmt wird, wobei der Kennwert (KW_{R}) mit steigender momentanen Motorleistung (Pₘ), steigender prognostizierter Motorleistung (Pₚ) oder steigendem prognostizierten Motorleistungsgradienten (δPₚ) zunimmt.

9. Verfahren nach einem der vorhergehenden Ansprüche, **dadurch gekennzeichnet, dass** ein Kennwert (KW_{R}) als Maß für die Regenerationsnotwendigkeit bestimmt wird, wobei der Kennwert (KW_{R}) mit steigendem Beschleunigungsgradient (δa) oder höherer Fahrpedalstellung (α_{fp}) zunimmt.

10. Vorrichtung zur Ermittlung einer Regenerationsnotwendigkeit eines NOₓ₋Speicherkatalysators (18), der in einem Abgasstrang (12) einer zumindest zeitweise magerlaufenden Verbrennungskraftmaschine (10) für Kraftfahrzeuge angeordnet ist, wobei ein Steuergerät (30) vorhanden ist, in dem eine Prozedur zur Bestimmung der Regenerationsnotwendigkeit in Abhängigkeit
(a) von einer verbleibenden NOₓ-Speicherfähigkeit des NOₓ-Speicherkatalysators (18) und
(b) von antriebsseitigen Parametern, umfassend
- eine momentane Motorleistung (Pₘ) der Verbrennungskraftmaschine (10) und einen prognostizierten Motorleistungsgradienten (δPₚ) in einem vorgegebenen Zeithorizont (Tₚ) und/oder eine prognostizierte Motorleistung (Pₚ) am Ende des vorgegebenen Zeithorizontes (Tₚ) oder
- einen prognostizierten Motorleistungsgradienten (δPₚ) in einem vorgegebenen Zeithorizont (Tₚ) und/oder eine prognostizierte Motorleistung (Pₚ) am Ende des vorgegebenen Zeithorizontes (Tₚ)
in digitalisierter Form hinterlegt ist.

11. Vorrichtung nach Anspruch 10, **dadurch gekennzeichnet, dass** das Steuergerät (30) Teil eines Motorsteuergerätes (28) ist.

## Claims

1. Method for determining the need for regeneration in a NOₓ storage catalytic converter (18) which is arranged in an exhaust gas system (12) of an internal combustion engine (10), which operates at least at times in a lean-running mode, for motor vehicles, the need for regeneration being determined as a function of
(a) a remaining NOₓ storage capacity of the NOx storage catalytic converter (18) and
(b) drive train parameters, comprising
- an instantaneous engine power (Pₘ) of the internal combustion engine (10) and a forecast engine power gradient (δPₚ) in a predefined time horizon (Tₚ) and/or a forecast engine power (Pₚ) at the end of the predefined time horizon (Tₚ) or
- a forecast engine power gradient (δPₚ) in a predefined time horizon (Tₚ) and/or a forecast engine power (Pₚ) at the end of the predefined time horizon (Tₚ).

2. Method according to Claim 1, **characterized in that** an acceleration gradient (δa) for a predefined time interval (Tₐ) is additionally taken into consideration in the determination.

3. Method according to one of the preceding claims, **characterized in that** an accelerator pedal setting (α_{fp}) is additionally taken into consideration in the determination.

4. Method according to one of the preceding claims, **characterized in that** a transmission ratio (u) of a transmission is additionally taken into consideration in the determination.

5. Method according to one of the preceding claims, **characterized in that** a driving situation (FS) of the motor vehicle is additionally taken into consideration in the determination.

6. Method according to Claim 5, **characterized in that** the driving situation (FS) is a lean acceleration phase, in particular from rest.

7. Method according to one of the preceding claims, **characterized in that** the forecast engine power (Pₚ) and/or the forecast engine power gradient (δPₚ) are calculated on the basis of a model which incorporates a past torque profile, the driving situation (FS), the acceleration gradient (δa), the accelerator pedal setting (α_{fp}) and the current transmission ratio (u).

8. Method according to one of the preceding claims, **characterized in that** a characteristic value (KW_{R}) is determined as a measure of the need for regeneration, the characteristic value (KW_{R}) increasing with increasing instantaneous engine power (Pₘ), increasing forecast engine power (Pₚ) or increasing forecast engine power gradient (δPₚ).

9. Method according to one of the preceding claims, **characterized in that** a characteristic value (KW_{R}) is determined as a measure of the need for regeneration, the characteristic value (KW_{R}) increasing with increasing acceleration gradient (δa) or a higher accelerator pedal setting (α_{fp}).

10. Device for determining the need for regeneration in a NOₓ storage catalytic converter (18) which is arranged in an exhaust gas system (12) of an internal combustion engine (10), which operates at least at times in a lean-running mode, for motor vehicles, a control unit (30) being present in which a procedure for determining the need for regeneration as a function of
(a) a remaining NOₓ storage capacity of the NOₓ storage catalytic converter (18) and
(b) drive train parameters, comprising
- an instantaneous engine power (Pₘ) of the internal combustion engine (10) and a forecast engine power gradient (δP_{P}) in a predefined time horizon (T_{P}) and/or a forecast engine power (Pₚ) at the end of the predefined time horizon (Tₚ) or
- a forecast engine power gradient (δPₚ) in a predefined time horizon (Tₚ) and/or a forecast engine power (Pₚ) at the end of the predefined time horizon (Tₚ)
is stored in digital form.

11. Device according to Claim 10, **characterized in that** the control unit (30) is part of an engine control unit (28).

## Revendications

1. Procédé pour déterminer la nécessité de régénération d'un catalyseur à accumulation de NOx (18), qui est disposé dans le système de gaz d'échappement (12) d'un moteur à combustion interne (10) pour véhicules à fonctionnement en mélange pauvre au moins temporairement, dans lequel la nécessité de régénération est déterminée en fonction:
(a) d'une capacité d'accumulation de NOx restante du catalyseur à accumulation de NOx (18), et
(b) de paramètres du côté de l'entraînement, comprenant :
- une puissance instantanée du moteur (Pₘ) du moteur à combustion interne (10) et un gradient de puissance de moteur pronostiqué (δPₚ dans un intervalle de temps prédéfini (Tₚ) et/ou une puissance du moteur pronostiquée (Pₚ) à la fin de l'intervalle de temps prédéfini (Tₚ) ou
- un gradient de puissance du moteur pronostiqué (δPₚ) dans un intervalle de temps prédéfini (Tₚ) et/ou une puissance du moteur pronostiquée (Pₚ) à la fin de l'intervalle de temps prédéfini (Tₚ).

2. Procédé selon la revendication 1, **caractérisé en ce que** lors de la détermination, on tient compte en outre d'un gradient d'accélération (δa) pour un intervalle de temps prédéfini (Tₐ).

3. Procédé selon l'une quelconque des revendications précédentes, **caractérisé en ce que** lors de la détermination, on tient compte en outre d'une position de la pédale d'accélérateur (δ_{fp}).

4. Procédé selon l'une quelconque des revendications précédentes, **caractérisé en ce que** lors de la détermination, on tient compte en outre d'un rapport de transmission (u) d'une boîte de vitesses.

5. Procédé selon l'une quelconque des revendications précédentes, **caractérisé en ce que** lors de la détermination, on tient compte en outre d'une situation de conduite (FS) du véhicule automobile.

6. Procédé selon la revendication 5, **caractérisé en ce que** la situation de conduite (FS) est une phase d'accélération en mode de fonctionnement à mélange pauvre, notamment à partir de l'état d'arrêt.

7. Procédé selon l'une quelconque des revendications précédentes, **caractérisé en ce que** la puissance du moteur pronostiquée (Pₚ) et/ou le gradient de puissance de moteur pronostiqué (δPₚ) est calculé(e) à l'aide d'un modèle dans lequel sont entrés un couple passé, la situation de conduite (FS), le gradient d'accélération (δa), la position de la pédale d'accélérateur (δ_{fp}) et le rapport de transmission actuel (u).

8. Procédé selon l'une quelconque des revendications précédentes, **caractérisé en ce que** l'on détermine une valeur caractéristique (KW_{R}) en tant que mesure de la nécessité de régénération, la valeur caractéristique (KW_{R}) augmentant avec l'augmentation de la puissance instantanée du moteur (Pₘ), l'augmentation de la puissance du moteur pronostiquée (Pₚ) ou l'augmentation du gradient de puissance de moteur pronostiqué (δPₚ).

9. Procédé selon l'une quelconque des revendications précédentes, **caractérisé en ce que** l'on détermine une valeur caractéristique (KW_{R}) en tant que mesure de la nécessité de régénération, la valeur caractéristique (KW_{R}) augmentant avec l'augmentation du gradient d'accélération (δa) ou avec une position plus relevée de la pédale d'accélérateur (δ_{fp}).

10. Dispositif pour déterminer la nécessité de régénération d'un catalyseur à accumulation de NOx (18), qui est disposé dans le système de gaz d'échappement (12) d'un moteur à combustion interne (10) pour véhicules à fonctionnement en mélange pauvre au moins temporairement, dans lequel on prévoit un appareil de commande (30) dans lequel une procédure de détermination de la nécessité de régénération est consignée sous forme numérique en fonction
(a) d'une capacité d'accumulation de NOx restante du catalyseur à accumulation de NOx (18), et
(b) de paramètres du côté de l'entraînement, comprenant :
- une puissance instantanée du moteur (Pₘ) du moteur à combustion interne (10) et un gradient de puissance de moteur pronostiqué (δPₚ) dans un intervalle de temps prédéfini (Tₚ) et/ou une puissance du moteur pronostiquée (Pₚ) à la fin de l'intervalle de temps prédéfini (Tₚ) ou
- un gradient de puissance du moteur pronostiqué (δPₚ) dans un intervalle de temps prédéfini (Tₚ) et/ou une puissance du moteur pronostiquée (Pₚ) à la fin de l'intervalle de temps prédéfini (Tₚ).

11. Dispositif selon la revendication 10, **caractérisé en ce que** l'appareil de commande (30) fait partie d'un appareil de commande du moteur (28).
